# EUROPÄISCHE PATENTSCHRIFT

(11) **EP 2 236 069 B1**
(45) Veröffentlichungstag und Bekanntmachung des Hinweises auf die Patenterteilung: **25.12.2019**
(21) Anmeldenummer: 10156824.4
(22) Anmeldetag: 18.03.2010
(51) Int. Cl.: A47L 9/00, A47L 11/40

(54) **Selbsttätig verfahrbares Gerät, insbesondere selbsttätig verfahrbares Bodenstaub-Aufsammelgerät**
Self-propelled device, in particular self-propelled dust collection device
Appareil automobile, notamment appareil de collecte de la poussière au sol automobile

(30) Priorität: 01.04.2009 DE 102009015816; 28.05.2009 DE 102009023066
(43) Veröffentlichungstag der Anmeldung: 06.10.2010
(73) Patentinhaber: Vorwerk & Co. Interholding GmbH, 42275 Wuppertal (DE)
(72) Erfinder: Meyer, Frank, 58640 Iserlohn (DE); Windorfer, Harald, Dr., 40822 Mettmann (DE); Zuber, Daniel, Dr., 42109 Wuppertal (DE); Gräfingholt, Dirk, 58093 Hagen (DE)
(74) Vertreter: Müller, Enno

(56) Entgegenhaltungen:
- WO-A1-2009/012474
- GB-A- 2 278 937
- US-A- 5 006 721
- US-A- 5 717 484
- US-A- 6 142 252
- US-A1- 2004 236 468
- US-B1- 6 481 515

## Beschreibung

Die Erfindung betrifft ein selbsttätig verfahrbares Gerät, insbesondere selbsttätig verfahrbares Bodenstaub-Aufsammelgerät, nach den Merkmalen des Oberbegriffs des Anspruches 1.

Geräte der in Rede stehenden Art sind bekannt, so bspw. aus der DE 102 42 257 A1. Beim Befahren eines Raumes mittels eines selbsttätig verfahrbaren Geräts, insbesondere Bodenstaub-Aufsammelgeräts muss dieses Gegenstände und Raumbegrenzungen erkennen und durch angemessene Rangier- und Ausweichbewegungen reagieren. In diesem Zusammenhang ist es bekannt, zur Hinderniserkennung optische Abstandssensoren einzusetzen. Bei Erkennung eines den Verfahrweg blockierenden Gegenstandes wird das Empfangssignal des optischen Sensors von einem Mikroprozessor verarbeitet, der das Stoppen der Antriebsräder veranlasst bzw. eine entsprechende Verhaltensstrategie des Gerätes auslöst. Um eine sinnvolle Navigation innerhalb eines Raumes anzubieten, ist es weiter bekannt, das Gerät mit einer Hinderniserkennung zu versehen, welche einen großen Umfangsbereich des Gerätes erfasst und so eine zumindest annähernde Rundumerfassung bietet. Hierzu ist die Sendeeinheit und/ oder die Empfängereinheit drehbar angeordnet, weiter drehbar um eine Vertikalachse des Gerätes, womit ein Abtastwinkel von 180° bis hin zu 270° oder mehr erreicht ist.

Aus der WO 2009/012474 A1 ist ein selbsttätig verfahrbares Gerät mit einer Hindernis-Erkennung bekannt, wobei die Hindernis-Erkennung eine Sende-und Empfangseinheit aufweist. Der Strahl ist hierbei so geführt, dass der Mittelstrahl jeweils außerhalb der Drehachse des Drehteils, unter Versetzung zu der Drehachse, verläuft. Weiter ist aus der US 6,481,515 B1 ein Gerät mit einer Sende- und Empfangseinheit bekannt, wobei diese Einheit einen drehenden Spiegel anordnet, die Sende- und Empfangseinheit selbst jedoch jeweils feststehend ausgebildet ist.

Aus der US 2004/236468 A1 ist im Hinblick auf eine Hindernis-Erkennung eine Leuchtquelle für Ultraviolettlicht bekannt, wobei diese Leuchtquelle und auch eine Empfangseinheit jeweils feststehend angeordnet ist. Aus der US 5 717 484 A ist eine Hindernis-Erkennung mit einer Sende- und Empfangseinheit bekannt, bei welcher eine der Empfangseinheit vorgeschaltete Linse mit der Empfangseinheit mitdrehend ist. Ein Mittenstrahl verläuft bei dem Empfänger außerhalb der Drehachse. Aus der GB 2 278 937 A ist eine Sende- und Empfangseinheit mit einem Ultraschallsensor und einem optischen Emitter und Empfänger bekannt. Der optische Emitter und Empfänger weist jedoch kein Element auf, das zur Drehung in einem Drehteil angeordnet ist und bei dem die Drehachse des Drehteils im Falle der Empfangseinheit mit dem Mittenstrahl zusammenfällt.

Weiter ist aus der US 6142 252 A eine auf einem Verfahrgestell eines selbsttätig verfahrbaren Gerätes um +/- 90 Grad verschwenkbare Sende- und Empfangseinheit zur Hindernis-Erkennung bekannt. Auch hier ist aber nur eine Empfangseinheit verwirklicht, bei welcher der Mittenstrahl eines Strahlenbündels die Drehachse im Falle der Empfangseinheit rechtwinklig schneidet.

Schließlich ist zum Stand der Technik auf die US 5 006 721 A zu verweisen. Bei der hieraus bekannten Hindernis-Erkennung ist ein rotierender Spiegel vorgesehen, ist die Sende- und Empfangseinheit aber feststehend ausgebildet.

Ausgehend von dem dargelegten Stand der Technik beschäftigt sich die Erfindung mit der Aufgabenstellung, ein selbsttätig verfahrbares Gerät, insbesondere ein selbsttätig verfahrbares Bodenstaub-Aufsammelgerät, mit einer vorteilhaften Sende- und Empfangseinheit zur Hindernis-Erkennung anzugeben.

Diese Aufgabe ist beim Gegenstand des Anspruches 1 gelöst, wobei darauf abgestellt ist, dass die Sende- und Empfängereinheiten auf einem der optischen Messverfahren Phasenkorrelation, Lichtlaufzeitmessung oder Heterodynverfahren beruhen, dass bezüglich der zumindest teilweise drehbaren Anordnung der Sende- und/oder Empfängereinheiten die Führung eines Strahls so erfolgt, dass der Mittelstrahl eines Strahlenbündels zwischen wenigstens zwei optischen Elementen, von denen zumindest eines zur Drehung in einem Drehteil angeordnet ist, die Drehachse des Drehteils im Falle der Sendeeinheit schneidet und im Falle der Empfangseinheit mit ihr zusammenfällt.

Es sind Reichweiten von mehr als 20 cm, bevorzugt mehr als 50 cm ab Gerätekante erreichbar, womit entsprechend weiter entfernte Hindernisse bzw. Raumbegrenzungen erkannt werden, so dass eine frühzeitige Reaktion des Gerätes ausgelöst werden kann. Weiter ist hierdurch eine verbesserte Orientierung des Gerätes innerhalb eines Raumes ermöglicht. Bei einem Lichtlaufzeitverfahren wird die Wegezeit zwischen dem Aussenden eines kurzen Lichtimpulses und dem Eintreffen des an einem Hindernis reflektierten Lichts an dem optischen Empfänger gemessen. Bei einem Phasenkorrelationsverfahren wird ein modulierter Lichtstrahl ausgesendet, welcher rechteckförmig oder sinusförmig ist, weiter alternativ eine andere periodische Form aufweist. Trifft der so modulierte Lichtstrahl auf ein Hindernis, so wird ein Teil der Lichtenergie reflektiert und trifft auf den optischen Empfänger, welches reflektierte Licht ebenfalls moduliert ist. Aufgrund der Laufzeit zwischen dem Aussenden des Lichtsignals und des Empfangens des reflektierten Lichtes stellt sich eine Phasenverschiebung ein, die von der zu messenden Entfernung abhängt. So kann die Phasenverschiebung auf elektronischem Wege ermittelt werden, woraus ein Maß für die gemessene Entfernung resultiert. Die Modulation der Ansteuerung der Sendeeinheit erfolgt bevorzugt mit einer Frequenz, welche dem Entfernungsmessbereich des Sensors angepasst ist. Um bei einer Auswertung des reflektierten Signals über einen Phasendiskriminator eindeutige Messwerte zu erhalten, ist bevorzugt die größte zu messende Entfernung kleiner bzw. maximal gleich einem Viertel der Wellenlänge des aufmodulierten Signals. Da der Signalweg von der Sendeeinheit zu einem erfassten Objekt und von diesem zurück zur Empfängereinheit nahe an die bzw. identisch zu der Sendeeinheit führt, beträgt der Signalweg unter dieser Bedingung maximal die Hälfte der Wellenlänge des aufmodulierten Signals. Hierbei kann weiter das periodische Modulationssignal zu jedem Zeitpunkt vorhanden sein; alternativ im Sinne von Signalpaketen in bestimmten Zeitintervallen aktiviert werden. Das Heterodynverfahren arbeitet nach dem Prinzip der Interferometrie. Hierbei wird ein Lichtstrahl mit einer definierten Frequenz vorzugsweise sinusförmig moduliert. Diese Frequenz wird kontinuierlich variiert. Das von einem Hindernis reflektierte Licht wird von der Empfängereinheit detektiert und mit dem ausgesendeten Signal verglichen. Tritt konstruktive Interferenz zwischen gesendetem und empfangenem Signal auf, so ist die Entfernung zum Hindernis ein ganzzahliges Vielfaches der Wellenlänge der aktuellen Modulationsfrequenz. Durch Überlagerung und kontinuierlicher Variierung (Sweepen) mehrerer Modulationsfrequenzen ist eine Eindeutigkeit der Messung erreichbar.

Es ist weiter ein Auswerteverfahren in Form eines Phasenvergleiches zwischen der Modulation des empfangenen Signals und des senderseitigen Modulationssignals vorgesehen. Hierzu ist bspw. ein Phasendiskriminator in Form eines integrierten Bausteins oder in diskret aufgebauter Form vorgesehen. Der Phasenunterschied beider Modulationssignale stellt das gewünschte Maß der Entfernung eines reflektierenden Objektes vom Abstandssensor (Sende- und Empfängereinheiten) dar. Zwischen optischer Empfängereinheit und Phasendiskriminator befindet sich weiter bevorzugt eine Signalaufbereitungsstufe, die durch einen Verstärker bzw. Komparator gegeben ist. Diese Signalaufbereitungsstufe sorgt für eine Pegelanpassung zwischen optischer Empfangseinheit und Phasendiskriminator. Hierzu erzeugt die Signalaufbereitungsstufe aus unterschiedlichen Empfangsamplituden stets gleiche Signalamplituden, so dass eine Entfernungsmessung über einen weiten Bereich des Reflektionsgrades eines erfassten Objektes ermöglicht wird.

In weiterer Ausführungsform verfügt die Signalaufbereitungsstufe zusätzlich über Vorrichtungen zur Elimination bzw. Reduzierung von Störeinflüssen aufgrund elektromagnetischer Einstreuungen oder Fremdlicht. Diese Vorrichtungen bestehen bspw. aus einem Bandpassfilter, einer Phasenregelschleife (PLL) oder einer Kombination aus beidem. Zur Elimination der Signallaufzeiten von Verstärker bzw. Komparator, PLL oder Bandpassfilter können gleichartige Baugruppen zusätzlich zwischen das senderseitige Modulationssignal und dem Phasendiskriminator geschaltet sein. Sowohl die Signalaufbereitungsstufe als auch der Phasendiskriminator sind in einer Ausgestaltung einfach oder auch mehrfach vorhanden, wobei eine mehrfache Anordnung zur Auswertung mehrerer empfangener Signale von mehreren oder array-förmigen bzw. zeilenartigen optischen Empfangseinheiten genutzt werden.

Im Falle mehrerer Empfangssignale werden bevorzugt die Signalaufbereitungsstufe bzw. der Phasendiskriminator einfach vorgesehen, wobei weiter über einen Multiplexer sequentiell die verschiedenen Empfangssignale verarbeitet werden.

Alternativ zur Entfernungsmessung mittels eines oder mehrerer Phasendiskriminatoren wird die Entfernungsmessung über eine Zeitmessung durchgeführt, welche vom Sendezeitpunkt eines Modulations-Paketes bis zum Empfangszeitpunkt eines eingehenden Signalpaketes verläuft. In diesem Fall ist der Entfernungs-Messbereich unabhängig von der Wellenlänge eines aufmodulierten Signals. Wird die Entfernungsmessung über eine Laufzeitmessung vorgenommen, so besteht bevorzugt das Modulationssignal in Abweichung bzw. Ergänzung zu den vorbeschriebenen Signalformen wahlweise als Impuls bzw. Impulspaket.

Die zumindest teilweise drehbare Anordnung der Sende- und Empfangseinheit ist mit einer Führung des Strahls so vorgesehen, dass der Mittelstrahl eines Strahlenbündels zwischen wenigstens zwei optischen Elementen, von denen zumindest eines zur Drehung in einem Drehteil angeordnet ist, die Drehachse des Drehteils schneidet oder mit ihr zusammen fällt. Optische Elemente in diesem Sinne sind die Sende- oder Empfängereinheit, sowie strahlumlenkende und strahlformende Elemente, wie Linsen und Spiegel oder dergleichen. Schneidet der Mittelstrahl eines Strahlenbündels die Drehachse des Drehteiles, so ist bevorzugt die zugeordnete Sende- oder Empfängereinheit zugleich in dem Drehteil angeordnet, weiter mit Bezug auf die Drehachse des Drehteils in dem dem Lichtaustritt bzw. Lichteintritt aus bzw. in das Drehteil gegenüberliegenden Drehteilabschnitt. Fällt hingegen der Mittelstrahl mit der Drehachse des Drehteils zusammen, so ist bei einer generell bevorzugten annähernd horizontalen Ausrichtung des Mittelstrahls im Bereich des Lichtaustritts bzw. Lichteintritts aus bzw. in das Drehteil eine Umlenkung des Mittelstrahls innerhalb des Drehteils erreicht, wobei weiter die Sende- und / oder Empfängereinheit bevorzugt ohne weitere strahlumlenkende Elemente koaxial zur Drehteil-Drehachse ausgerichtet ist, hierbei weiter innerhalb des Drehteils angeordnet sein kann. Bevorzugt wird bei einem Zusammenfallen des Mittelstrahls mit der Drehachse die Sende- und oder Empfängereinheit in den relativ zu dem drehbaren Drehteil feststehenden Gerätegehäuse positioniert. Dies bietet eine vorteilhafte direkte elektrische Kontaktierung der Sende- und / oder Empfängereinheit innerhalb des Geräts.

In einer Weiterbildung des Erfindungsgegenstandes ist eine rotierende 360°-Erfassung vorgesehen, derart, dass die Sende- und / oder Empfängereinheit kontinuierlich unter Rundumerfassung um eine Vertikalachse des Gerätes dreht, weiter alternativ eine alternierende Schwenkbewegung ausführt, wobei in einer Bewegungsrichtung eine 360°-Rundumerfassung erreicht ist.

In einer weiter bevorzugten Ausgestaltung ist ein in Strahlrichtung der Sendeeinheit liegendes letztes strahlumlenkendes Element in dem Drehteil angeordnet, dreht entsprechend zur Rundumerfassung um eine bevorzugt vertikale Achse des Gerätes, wobei weiter in Strahlrichtung vor diesem letzten strahlumlenkenden Element ggf. weiter vorgesehene strahlumlenkende Elemente in dem Drehteil und / oder in diesem gegenüber feststehenden Gerät angeordnet sind. Das strahlumlenkende Element dient zur Umlenkung des ausgesandten Lichtstrahles in eine Richtung, die in einem Winkel steht zu dem in Strahlrichtung auf das Element auftreffenden Strahl. So ist diesbezüglich insbesondere eine Umlenkung eines Mittenstrahls von 75° bis 105°, bevorzugt 90°, vorgesehen, weiter eine Umlenkung aus einer vertikalen Strahlrichtung in eine zumindest annähernd horizontale Strahlrichtung.

Bevorzugt wird weiter, dass ein vor dem letzten strahlumlenkenden Element vorgesehenes weiteres optisches Element ortsfest angeordnet ist, entsprechend bevorzugt in dem gegenüber dem Drehteil feststehenden Gerät. Bei diesem op-tischen Element kann es sich um ein strahlumlenkendes oder strahlformendes Element handeln, weiter auch die Sendeeinheit. Entsprechend ist das letzte strahlumlenkende Element in dem Drehteil das in Strahlrichtung der Sendeeinheit betrachtete erste optische Element im Drehteil.

Weiter wird vorgeschlagen, dass die Sendeeinheit ortsfest angeordnet ist und in dem Drehteil eine Strahlumlenkung mittels eines Spiegels oder Reflektors erfolgt. Die Sendeeinheit ist hierbei bevorzugt in dem gegenüber dem Drehteil feststehenden Gerät vorgesehen, mit einer Strahlrichtung, die bevorzugt nach vertikal oben entlang der Drehachse des Drehteils gerichtet ist, weiter in Richtung auf den in dem Drehteil angeordneten Spiegel bzw. Reflektor zur Strahlumlenkung aus der Vertikalen in eine bevorzugte Horizontale.

Eine weitere Ausgestaltung sieht vor, dass in Strahlrichtung nach dem strahlumlenkenden Element ein strahlformendes Element angeordnet ist, so weiter bspw. zur Bündelung des Lichtstrahles, weiter bspw. zur Filterung. Zufolge der vorbeschriebenen Anordnung ist das nach dem strahlumlenkenden Element angeordnete strahlformende Element zugleich in dem Drehteil vorgesehen, so dass auch dieses im Betrieb um die bevorzugt vertikal ausgerichtete Drehachse zur Rundumerfassung dreht. In alternativer oder auch kombinativer Ausgestaltung ist das strahlformende Element im Strahlengang vor dem strahlumlenkenden Element angeordnet, so dass eine Strahlenformung in Strahlrichtung der Sendeeinheit vor einer Umlenkung erreicht ist. Das strahlformende Element vor dem strahlumlenkenden Element kann hierbei in dem gegenüber dem Drehteil feststehenden Gerät, nachgeschaltet zu der Sendeeinheit angeordnet sein, alternativ jedoch auch innerhalb des Drehteiles, womit eine Bündelung der strahlformenden und strahlumlenkenden Elemente innerhalb des Drehteiles erreichbar ist. Sind sowohl ein in Strahlrichtung vor dem letzten strahlumlenkenden Element als auch ein strahlformendes Element hinter dem letzten strahlumlenkenden Element vorgesehen, so stehen die strahlformenden Elemente mit Bezug auf ihre Erstreckungsebenen in einem an die Strahlumlenkung angepassten Winkel, so weiter bei einer bevorzugten 90°-Umlenkung senkrecht zueinander.

In weiter bevorzugter Ausgestaltung ist ein in Strahlrichtung der Empfängereinheit liegendes erstes strahlumlenkendes Element in dem Drehteil angeordnet, dreht entsprechend zur Rundumerfassung um eine bevorzugt vertikale Achse des Gerätes, wobei weiter in Strahlrichtung hinter diesem ersten strahlumlenkenden Element ggf. weiter vorgesehene strahlumlenkende Elemente in dem Drehteil und / oder in diesem gegenüber feststehenden Gerät angeordnet sind. Das strahlumlenkende Element dient zur Umlenkung des reflektierten Lichtstrahles in eine Richtung, die in einem Winkel steht zu dem in Strahlrichtung auf das Element auftreffenden Strahl. So ist diesbezüglich insbesondere eine Umlenkung eines Mittenstrahls von 75° bis 105°, bevorzugt 90°, vorgesehen, weiter eine Umlenkung aus einer horizontalen Strahlrichtung in eine zumindest annähernd vertikale Strahlrichtung.

Bevorzugt wird weiter, dass ein nach dem ersten strahlumlenkenden Element vorgesehenes weiteres optisches Element ortsfest angeordnet ist, entsprechend bevorzugt in dem gegenüber dem Drehteil feststehenden Gerät. Bei diesem optischen Element kann es sich um ein strahlumlenkendes oder strahlformendes Element handeln, weiter auch die Empfängereinheit.

Weiter wird vorgeschlagen, dass die Empfängereinheit ortsfest angeordnet ist und in dem Drehteil eine Strahlumlenkung mittels eines Spiegels erfolgt. Die Empfängereinheit ist hierbei bevorzugt in dem gegenüber dem Drehteil feststehenden Gerät vorgesehen, mit einer Strahlempfangsrichtung, die bevorzugt entlang der Drehachse des Drehteils gerichtet ist, weiter ausgehend von dem in dem Drehteil angeordneten Spiegel zur Strahlumlenkung aus der Horizontalen in eine bevorzugte Vertikale.

Eine weitere Ausgestaltung sieht vor, dass in Strahlrichtung vor dem strahlumlenkenden Element ein strahlformendes Element angeordnet ist, so weiter bspw. zur Bündelung des Lichtstrahles, weiter bspw. zur Filterung. Zufolge der vorbeschriebenen Anordnung ist das vor dem strahlumlenkenden Element angeordnete strahlformende Element zugleich in dem Drehteil vorgesehen, so dass auch dieses im Betrieb um die bevorzugt vertikal ausgerichtete Drehachse zur Rundumerfassung dreht. In alternativer oder auch kombinativer Ausgestaltung ist das strahlformende Element im Strahlengang nach dem strahlumlenkenden Element angeordnet, so dass eine Strahlenformung in Strahlrichtung der Empfängereinheit nach einer Umlenkung erreicht ist. Das strahlformende Element nach dem strahlumlenkenden Element kann hierbei in dem gegenüber dem Drehteil feststehenden Gerät vorgeschaltet zu der Empfängereinheit angeordnet sein, alternativ jedoch auch innerhalb des Drehteiles, womit eine Bündelung der strahlformenden und strahlumlenkenden Elemente innerhalb des Drehteiles erreichbar ist. Sind sowohl ein in Strahlrichtung vor dem ersten strahlumlenkenden Element als auch ein strahlformendes Element hinter dem ersten strahlumlenkenden Element vorgesehen, so stehen die strahlformenden Elemente mit Bezug auf ihre Erstreckungsebenen in einem an die Strahlumlenkung angepassten Winkel, so weiter bei einer bevorzugten 90°-Umlenkung senkrecht zueinander.

Das strahlformende Element ist in einer Ausgestaltung eine Linse, insbesondere Bikonkavlinse, eine Bikonvexlinse, eine Konkavkonvexlinse, eine Plankonvexlinse oder darüber hinaus eine Plankonkavlinse mit sphärischer, weiter bevorzugt asphärischer Linsenform. Die Linse kann darüber hinaus auch in Form einer Fresnellinse ausgeführt sein. Eine asphärische Kollimatorlinse dient hierbei zur Strahlbündelung der Strahlquelle.

Das stahlumlenkende Element ist weiter bevorzugt zur Strahlumlenkung, ggf. auch zur Strahlformung ein Spiegel, insbesondere ein Planspiegel. Alternativ kann auch ein gekrümmter Spiegel zur Anwendung kommen, so bspw. in Form eines Sammelspiegels (Hohlspiegel) oder als Zerstreuungsspiegel, wobei sphärische, elliptische oder asphärische Formen möglich sind.

Auch ist das strahlumlenkende Element in weiterer Ausgestaltung ein Prisma oder auch ein Lichtleiter, der als Massivteil ausgeführt ist, alternativ als Hohlrohr oder als faseroptischer Lichtleiter.

Zudem stellen die optischen Elemente ggf. Filter dar, so insbesondere Filter nach Wellenlängen, wie bspw. eingefärbte Kunststoffteile, oder optische Schmalbandfilter (Interferenzfilter). Auch kann der Filter ein Intensitätsfilter in Form eines Graufilters sein, darüber hinaus ein linearer oder zirkularer Polarisationsfilter. Der Filter kann zudem entspiegelt sein durch Aufbringung einer entsprechenden Schicht bspw. Magnesiumfluorid. Zudem kann auch ein optisches Gitter den Filter bilden.

Weitere optische Elemente sind ggf. Blenden, wie mechanische Blenden in Form von Schlitz- oder Lochblenden. Weiter alternativ ist als optisches Element eine LCD-Optik vorgesehen, bei der der Strahlengang durch Einschalten von LCD-Zellen abgeblendet wird. Dies bietet auch eine Lösung zum Aufbau von dynamischen Blenden, die sich je nach Situation verändern.

Optische Elemente können auch gebildet sein durch eine oder mehrere planparallele, transparente Platten, bspw. als Fenster zum Schutz der Sende- und / oder Empfängereinheiten, welche Fenster die vorbeschriebenen optischen Eigenschaften zur Strahlumlenkung und / oder Strahlformung aufweisen.

Das optische Elemente aufweisende bzw. tragende Drehteil ist in bevorzugter Ausgestaltung von einer Schutzhaube überdeckt, um so die optischen Elemente vor äußeren Einflüssen, insbesondere mechanischen Einflüssen zu schützen. Die Schutzhaube kann hierbei mitdrehend an dem Drehteil selbst angeordnet sein. Eine alternative, weiter bevorzugte Ausgestaltung sieht eine gegenüber dem Drehteil feststehende Schutzhaube vor, so weiter insbesondere durch eine Festlegung der Schutzhaube an dem Gerät.

Der Antrieb des Drehteils ist weiter bevorzugt erreicht durch einen gesonderten Motor, insbesondere Elektromotor, der das Drehteil bei Inbetriebnahme des Gerätes direkt oder auch indirekt über zwischengeschaltete Übertragungsmittel antreibt. Alternativ ist der Drehteilantrieb gekoppelt an den Antrieb der geräteseitigen Verfahrräder, so dass ein Drehteilantrieb in Abhängigkeit steht zu einer Verfahrbewegung des Gerätes. In diesem Zusammenhang sind Übertragungsmittel vorgesehen, zur Ableitung des Antriebs für die Verfahrräder zum Drehteilantrieb. Auch kann eine Kopplung mit dem Elektromotor der rotierenden Bürste vorgesehen sein.

Der Antrieb des Drehteils erfolgt weiter über eine Reibradkupplung, weiter alternativ über eine Zahnradkupplung oder ein Zugmittelgetriebe mit einem Zahnriemen, Flachriemen, Keilriemen oder Rundriemen.

Zudem ist vorgesehen, dass die Schutzhaube aus einem Zylinderteil besteht, das von oben durch einen Deckel verschlossen ist, wobei weiter insbesondere der konzentrisch zur Drehachse vorgesehene Zylinderteil im Strahldurchsetzungsbereich transparent oder im Bereich der Wellenlänge der durchsetzenden Strahlen optisch durchlässig gestaltet ist, wobei weiter dieser Bereich zudem optische Eigenschaften aufweisen kann. So ist dieser transparente oder optisch durchlässige Schutzhaubenbereich bspw. als strahlumformendes Element gestaltet. In diesem Fall wirkt die Schutzhaube bzw. dessen Zylinderteil als Zylinderlinse. In weiterer Ausgestaltung ist das Zylinderteil kegelstumpfförmig gebildet mit im Querschnitt parallel verlaufenden Außen- und Innenflächen der zumindest teilweise transparenten Wandung. Auch kann die Zylinderteilwandung im Querschnitt durch zwei Kreisbögen gegeben sein, wobei bevorzugt der im Querschnitt betrachtete Innenradius größer gewählt ist als der Außenradius. Zudem ist in einer alternativen Ausgestaltung der Querschnitt der Zylinderteilwandung asphärisch geformt. Auch kann gemäß einer weiteren Ausbildung der Wandungsabschnitt des Zylinderteils als Fresnellinse ausgestaltet sein, wobei die Außenfläche durchgehend glatt gestaltet ist, um so einer Staubanhaftung von außen entgegenzuwirken. Die Innenfläche hingegen ist in Axialrichtung der Drehachse betrachtet segmentiert, so bspw. ausformend drei in Axialrichtung hintereinander angeordnete Segmente der so gestalteten Fresnellinse.

Die optischen Elemente, insbesondere die strahlumformenden Elemente bestehen in einer bevorzugten Ausgestaltung aus optischen Kunststoffen wie Polymethylmethacrylat (PMMA), Polycarbonat oder Polystyrol, weiter bspw. aus der Gruppe der Cyclo-Olefin-Copolymere (COC). Diese sind optisch klar oder zur Realisierung einer Filterfunktion eingefärbt oder lackiert. Auch können optisch klare oder zur Realisierung einer Filterfunktion eingefärbte oder lackierte Gläser zur Anwendung kommen. Darüber hinaus ist auch eine Kombination von zwei oder mehreren optischen Materialien möglich, z.B. zur Ausnutzung der Totalreflektion an der Grenzfläche zweier optisch unterschiedlicher Medien, wie dies bspw. in der Faseroptik ausgenutzt wird.

Weiter erweist es sich von Vorteil, wenn Funktionen unterschiedlicher optischer Elemente in einem Strahlengang (Sender- oder Empfängerstrahlengang) zusammengefasst werden. So können bspw. ein Filter und eine Linse zu einer einseitig mit einem Filter beschichteten Linse zusammengefasst werden, weiter bspw. auch ein gekrümmter Spiegel und ein Prisma zu einem Prisma mit gekrümmter Seite. Auch kann bspw. ein Spiegel und ein Filter zu einem filterbeschichteten Spiegel zusammengefasst werden. Faseroptische Lichtleiter und Spiegel werden bspw. zusammengefasst zu einem entsprechend dem Spiegelwinkel gebogenen faseroptischen Lichtleiter, der die gewünschte Strahlumlenkung verursacht. Dies ist weiter auch bei Lichtleitern aus einem prismatischen Körper im Zusammenhang mit einem im Strahlengang vorgesehenen Spiegel ermöglicht, welche zusammengefasst werden zu einem prismatischen Lichtleiter mit Strahlumlenkung.

Eine weitere Ausführungsform zeigt ein selbsttätig verfahrbares Gerät, insbesondere selbsttätig verfahrbares Bodenstaub-Aufsammelgerät, mit elektromotorisch angetriebenen Verfahrrädern, einem Gerätegehäuse und vorzugsweise einem Staubsammelbehälter, wobei das Gerät mit einer Hinderniserkennung versehen ist, die aus optischen Sende- und Empfängereinheiten besteht, wobei über den Umfang verteilt mehrere Strahlenquellen feststehend angeordnet sind und / oder mehrere feststehende Strahlenempfänger.

Zur Lösung der eingangs gestellten Problematik wird vorgeschlagen, dass die Sende- und Empfängereinheiten auf einem der optischen Messverfahren Phasenkorrelation, Lichtlaufzeitmessung oder Heterodynverfahren beruhen.

Diese Problematik ist zunächst und im Wesentlichen durch den Gegenstand der Ansprüchen gelöst, wobei darauf abgestellt ist, dass die Sende- und Empfängereinheiten auf einem der optischen Messverfahren Phasenkorrelation, Lichtlaufzeitmessung oder Heterodynverfahren beruhen. Zufolge dieser optischen Messverfahren sind Reichweiten von mehr als 40 cm, bevorzugt mehr als 50 cm ab Gerätekante erreichbar, womit entsprechend weiter entfernte Hindernisse bzw. Raumbegrenzungen erkannt werden, so dass eine frühzeitige Reaktion des Gerätes ausgelöst werden kann. Weiter ist hierdurch eine verbesserte Orientierung des Gerätes innerhalb eines Raumes ermöglicht. Bei einem Lichtlaufzeitverfahren wird die Wegezeit zwischen dem Aussenden eines kurzen Lichtimpulses und dem Eintreffen des an einem Hindernis reflektierten Lichts an dem optischen Empfänger gemessen. Bei einem Phasenkorrelationsverfahren wird ein modulierter Lichtstrahl ausgesendet, welcher rechteckförmig oder sinusförmig ist, weiter alternativ eine andere periodische Form aufweist. Trifft der so modulierte Lichtstrahl auf ein Hindernis, so wird ein Teil der Lichtenergie reflektiert und trifft auf den optischen Empfänger, welches reflektierte Licht ebenfalls moduliert ist. Aufgrund der Laufzeit zwischen dem Aussenden des Lichtsignals und des Empfangens des reflektierten Lichtes stellt sich eine Phasenverschiebung ein, die von der zu messenden Entfernung abhängt. So kann die Phasenverschiebung auf elektronischem Wege ermittelt werden, woraus ein Maß für die gemessene Entfernung resultiert. Die Modulation der Ansteuerung der Sendeeinheit erfolgt bevorzugt mit einer Frequenz, welche dem Entfernungsmessbereich des Sensors angepasst ist. Um bei einer Auswertung des reflektierten Signals über einen Phasendiskriminator eindeutige Messwerte zu erhalten, ist bevorzugt die größte zu messende Entfernung kleiner bzw. maximal gleich einem Viertel der Wellenlänge des aufmodulierten Signals. Da der Signalweg von der Sendeeinheit zu einem erfassten Objekt und von diesem zurück zur Empfängereinheit nahe an die bzw. identisch zu der Sendeeinheit führt, beträgt der Signalweg unter dieser Bedingung maximal die Hälfte der Wellenlänge des aufmodulierten Signals. Hierbei kann weiter das periodische Modulationssignal zu jedem Zeitpunkt vorhanden sein; alternativ im Sinne von Signalpaketen in bestimmten Zeitintervallen aktiviert werden. Das Heterodynverfahren arbeitet nach dem Prinzip der Interferometrie. Hierbei wird ein Lichtstrahl mit einer definierten Frequenz vorzugsweise sinusförmig moduliert. Diese Frequenz wird kontinuierlich variiert. Das von einem Hindernis reflektierte Licht wird von der Empfängereinheit detektiert und mit dem ausgesendeten Signal verglichen. Tritt konstruktive Interferenz zwischen gesendetem und empfangenem Signal auf, so ist die Entfernung zum Hindernis ein ganzzahliges Vielfaches der Wellenlänge der aktuellen Modulationsfrequenz. Durch Überlagerung und kontinuierlicher Variierung (Sweepen) mehrerer Modulationsfrequenzen ist eine Eindeutigkeit der Messung erreichbar.

Es ist weiter ein Auswerteverfahren in Form eines Phasenvergleiches zwischen der Modulation des empfangenen Signals und des senderseitigen Modulationssignals vorgesehen. Hierzu ist bspw. ein Phasendiskriminator in Form eines integrierten Bausteins oder in diskret aufgebauter Form vorgesehen. Der Phasenunterschied beider Modulationssignale stellt das gewünschte Maß der Entfernung eines reflektierenden Objektes vom Abstandssensor (Sende- und Empfängereinheiten) dar. Zwischen optischer Empfängereinheit und Phasendiskriminator befindet sich weiter bevorzugt eine Signalaufbereitungsstufe, die durch einen Verstärker bzw. Komparator gegeben ist. Diese Signalaufbereitungsstufe sorgt für eine Pegelanpassung zwischen optischer Empfangseinheit und Phasendiskriminator. Hierzu erzeugt die Signalaufbereitungsstufe aus unterschiedlichen Empfangsamplituden stets gleiche Signalamplituden, so dass eine Entfernungsmessung über einen weiten Bereich des Reflektionsgrades eines erfassten Objektes ermöglicht wird.

In weiterer Ausführungsform verfügt die Signalaufbereitungsstufe zusätzlich über Vorrichtungen zur Elimination bzw. Reduzierung von Störeinflüssen aufgrund elektromagnetischer Einstreuungen oder Fremdlicht. Diese Vorrichtungen bestehen bspw. aus einem Bandpassfilter, einer Phasenregelschleife (PLL) oder einer Kombination aus beidem. Zur Elimination der Signallaufzeiten von Verstärker bzw. Komparator, PLL oder Bandpassfilter können gleichartige Baugruppen zusätzlich zwischen das senderseitige Modulationssignal und dem Phasendiskriminator geschaltet sein. Sowohl die Signalaufbereitungsstufe als auch der Phasendiskriminator sind in einer Ausgestaltung einfach oder auch mehrfach vorhanden, wobei eine mehrfache Anordnung zur Auswertung mehrerer empfangener Signale von mehreren oder array-förmigen bzw. zeilenartigen optischen Empfangseinheiten genutzt werden.

Im Falle mehrerer Empfangssignale werden bevorzugt die Signalaufbereitungsstufe bzw. der Phasendiskriminator einfach vorgesehen, wobei weiter über einen Multiplexer sequentiell die verschiedenen Empfangssignale verarbeitet werden.

Alternativ zur Entfernungsmessung mittels einer oder mehrerer Phasendiskriminatoren wird die Entfernungsmessung über eine Zeitmessung durchgeführt, welche vom Sendezeitpunkt eines Modulations-Paketes bis zum Empfangszeitpunkt eines eingehenden Signalpaketes verläuft. In diesem Fall ist der Entfernungs-Messbereich unabhängig von der Wellenlänge eines aufmodulierten Signals. Wird die Entfernungsmessung über eine Laufzeitmessung vorgenommen, so besteht bevorzugt das Modulationssignal in Abweichung bzw. Ergänzung zu den vorbeschriebenen Signalformen wahlweise als Impuls bzw. Impulspaket.

In einer weiter bevorzugten Ausgestaltung sind die mehreren Strahlenquellen durch eine zentrale Strahlenquelle verwirklicht, die von einer, eine Vielzahl von Strahlenausgängen aufweisenden Blende umgeben sind. Es bedarf entsprechend nur einer zu aktivierenden Strahlenquelle, über welche mehrere Lichtstrahlen, bevorzugt gleichmäßig über den Umfang des Gerätes verteilt nach radial außen ausgesandt werden. Die die Strahlenausgänge aufweisende Blende kann hierbei eine die zentrale Strahlenquelle überdeckende Haube sein, wobei die Strahlenausgänge in Form von Durchbrechungen in der umlaufenden Wandung gebildet sind. In vorteilhafter Ausgestaltung ist jeder Strahlenausgang mit einem optischen Element, insbesondere in Form einer Sammellinse (Kollimator) versehen, welche den jeweiligen Lichtstrahl stärker bündelt.

Die über den Umfang verteilt feststehend angeordneten Strahlenquellen bzw. die durch die Blende verursachten mehreren Strahlen treffen nach einer entsprechenden Reflektion an Hindernissen entweder auf eine entsprechende Anzahl von Empfängereinheiten des Gerätes oder wie weiter bevorzugt auf eine um eine Vertikalachse des Gerätes um 360° drehbare Empfängereinheit.

Um störendes Streulicht abzuhalten, sind bei der vorgesehenen Blende, weiter auch bei einer ggf. vorgesehenen, ein Drehteil überdeckenden Schutzhaube die außerhalb der gezielt transparent gehaltenen Bereiche verbleibenden Innenflächen mit einer speziellen Färbung oder Beschichtung versehen, die alle Wellenlängen bis auf die des Lichtstrahls zur Messung absorbiert.

Nachstehend ist die Erfindung anhand der beigefügten Zeichnung, welche lediglich mehrere Ausführungsbeispiele darstellt, näher erläutert. Es zeigt:
- Fig. 1: in perspektivischer Darstellung ein Bodenstaub-Aufsammelgerät;
- Fig. 2: eine perspektivische Unteransicht des Bodenstaub-Aufsammelgeräts;

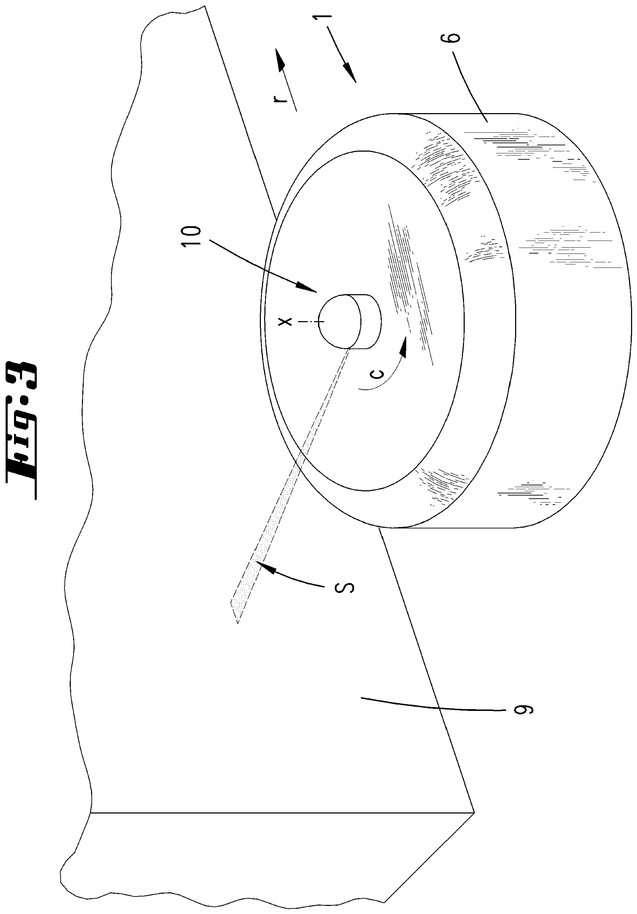

- Fig. 3: das Bodenstaub-Aufsammelgerät im Zuge einer Bodenbearbeitung bei Abtastung eines Hindernisses;
- Fig. 4: in schematischer Darstellung ein Drehteil des Geräts als Sendeeinheit mit in dem Drehteil integrierter Lichtquelle und einem strahlumformenden Element;
- Fig. 5: eine der Fig. 4 entsprechende schematische Darstellung, jedoch eine alternative Ausführungsform betreffend;
- Fig. 6: eine weitere alternative Ausführungsform zur Ausbildung einer Sendeeinheit;
- Fig. 7: die Sendeeinheit in schematischer Darstellung gemäß Fig. 4, eine weitere Ausführungsform betreffend;
- Fig. 8: in schematischer Darstellung das Drehteil als Empfängereinheit mit in dieser integriertem Empfangssensor und einem strahlumformenden Element;
- Fig. 9: eine der Fig. 8 entsprechende Darstellung, eine alternative Ausgestaltung betreffend;
- Fig. 10: in einer weiteren Ausführungsform eine schematische Darstellung gemäß Fig. 8;
- Fig. 11: das Drehteil mit zugeordneter Empfängereinheit in einer weiteren Ausführungsform;
- Fig. 12: in schematischer Darstellung das dem Gerät zugeordnete Drehteil mit einer Sendeeinheit und einer zugeordneten Empfängereinheit;
- Fig. 13: eine der Fig. 12 entsprechende Darstellung, mit in dem Drehteil integrierten Sende- und Empfängereinheiten sowie einem strahlformenden Element;
- Fig. 14: eine der Fig. 13 entsprechende Darstellung, eine weitere Ausführungsform betreffend;
- Fig. 15: das Gerät in partiell geschnittener Seitenansicht, eine weitere, schematisch dargestellte Ausführungsform betreffend;
- Fig. 16: den herausvergrößerten Bereich XVI in Fig. 15;
- Fig. 17: den herausvergrößerten Bereich XVII in Fig. 16;
- Fig. 18: eine der Fig. 17 entsprechende Darstellung, eine alternative Ausführungsform betreffend;
- Fig. 19: eine weitere der Fig. 17 entsprechende Darstellung in einer weiteren Ausführungsform;
- Fig. 20: einen schematischen Horizontalschnitt durch eine feststehende Sendeeinheit in einer alternativen Ausführungsform.

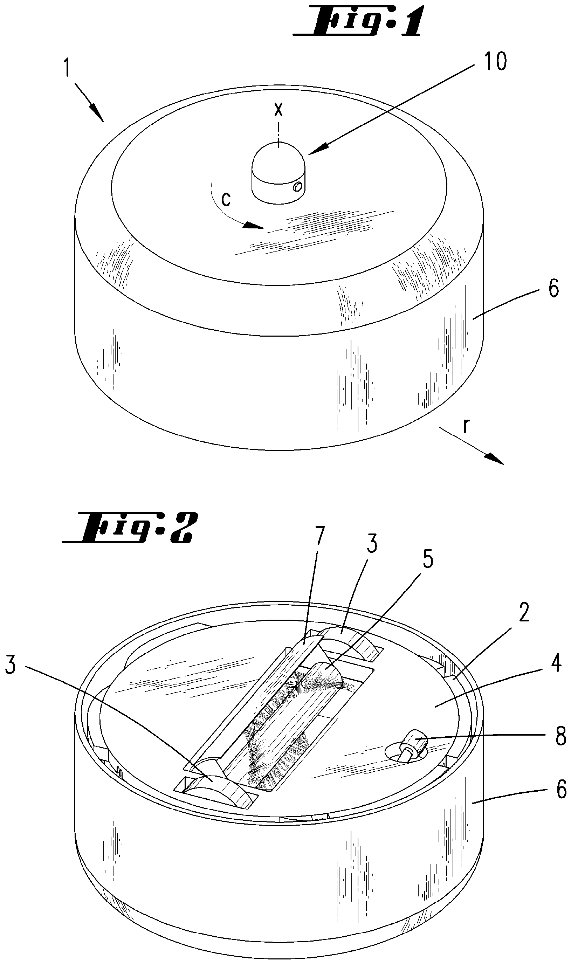

Dargestellt und beschrieben ist zunächst mit Bezug auf die Darstellungen in den Figuren 1 und 2 ein Bodenstaub-Aufsammelgerät 1 in Form eines Reinigungsroboters mit einem Chassis 2, welches unterseitig, dem zu pflegenden Boden zugewandt, elektromotorisch angetriebene Verfahrräder 3 sowie eine über die Unterkante des Chassisbodens 4 hinausragende, gleichfalls elektromotorisch angetriebene Bürste 5 trägt. Das Chassis 2 ist überfangen von einer Gerätehaube 6, wobei das Bodenreinigungsgerät 1 der dargestellten Ausführungsform einen kreisförmigen Grundriss aufweist.

Die Verfahrräder 3 sind in üblicher Verfahrrichtung r des Bodenstaub-Aufsammelgeräts 1 der Bürste 5 nachgeordnet, wobei der Bürste 5 weiter nachgeordnet eine kehrblechartige Schutzrampe 7 vorgesehen ist, über welche der abgebürstete Schmutz in eine nicht dargestellte behälterartige Aufnahme abgeworfen wird.

In üblicher Verfahrrichtung r ist der Bürste 5 vorgeordnet ein Stützrad in Form eines Mitlaufrades 8 positioniert, zufolge dessen eine Dreipunktauflage des Bodenstaub-Aufsammelgeräts 1 auf dem zu pflegenden Boden erreicht ist.

Weiter kann, wenngleich nicht dargestellt, das Bodenstaub-Aufsammelgerät 1 zusätzlich oder auch alternativ zur Bürste 5 eine Saugmundöffnung aufweisen. In diesem Fall ist in dem Gerät 1 weiter ein Sauggebläsemotor angeordnet, der elektrisch betrieben ist.

Die Elektroversorgung der einzelnen Elektrokomponenten des Gerätes 1 wie für den Elektromotor der Verfahrräder 3, für den Elektroantrieb, der Bürste 5, ggf. für das Sauggebläse und darüber für die weiter vorgesehene Elektronik in dem Gerät 1 zur Steuerung desselben erfolgt über einen nicht dargestellten, wiederaufladbaren Akkumulator.

Es besteht das Bedürfnis, bei derartigen Bodenstaub-Aufsammelgeräten 1 Hindernisse 9 zu erkennen, um ein Festfahren des Gerätes 1 zu verhindern. Hierzu ist eine sensorische Hinderniserkennung 10 vorgesehen. Diese besteht aus einer optischen Sendeeinheit 11 und einer optischen Empfängereinheit 12. Wenigstens eine dieser Einheiten 11 und 12 ist deckenseitig der Gerätehaube 6 und um eine Vertikalachse x des Aufsammelgerätes 1 drehbar angeordnet (Pfeil c). Sendeeinheit 11 und Empfängereinheit 12 beruhen auf einem optischen Messverfahren, wie insbesondere auf ein Phasenkorrelationsverfahren, Lichtlaufzeitmessung oder ein Heterodynverfahren, wobei weiter mindestens eine der Einheiten 11 und 12 um 360° um die Drehachse x des Aufsammelgerätes 1 rotiert, um so eine Rundum-Hinderniserfassung zu realisieren. Ist nur eine der Einheiten 11 bzw. 12 derart drehbar angeordnet, so besteht die andere Einheit aus fest mit dem Aufsammelgerät 1 verbundenen Sensorteilen, die gleichmäßig über den Umfang des Aufsammelgerätes 1 angeordnet sind.

Als Sendeeinheit 11 dient eine Laserdiode oder alternativ eine LED oder OLED, weiter alternativ eine auf Basis der Elektrolumineszenz arbeitende Lichtquelle. Bevorzugt wird eine Laserdiode mit rotem sichtbaren Licht mit einer Wellenlänge von 650 nm, grünes sichtbares Licht im Bereich von 532 nm oder nicht sichtbares Licht im Infrarotbereich zwischen 780 und 1100 nm. Darüber hinaus ist auch Licht im ultravioletten Bereich möglich.

Als Empfängereinheit 12 wird ein optischer Empfänger verwendet, der zumindest im gewählten Wellenlängenbereich der Sendeeinheit empfindlich ist. Die Empfängereinheit 12 ist ausgeführt als zumindest ein Phototransistor, eine Photodiode, Photowiderstand, CCD-Chip oder auch CMOS-Chip, wobei der optische Empfänger als einzelnes Empfangs-Element zur Erfassung eines einzelnen eingehenden Lichtsignals oder als mehrzelliges Array bzw. als mehrzellige Zeile zur simultanen oder sequentiellen Erfassung mehrerer eingehender Lichtsignale ausgebildet ist.

Die nachstehend näher beschriebenen Ausführungen sind so ausgelegt, dass ein einzelner Mess- bzw. Lichtstrahl eingesetzt wird, um eine Anzahl von Messungen (typischerweise 60 bis 360 Messungen, bevorzugt 180 Messungen, bei einem 360°-Umlauf) auf dem Kreisumfang durchzuführen. Dies ist dadurch erreicht, dass zumindest die Sendeeinheit 11 oder Teile hiervon um die Vertikalachse rotieren und in gewissen Abständen getaktet Messungen durchgeführt werden.

Bei einer entsprechend drehbaren Ausgestaltung der Sende- und / oder Empfängereinheit 12 erfolgt die Führung des Lichtstrahls derart, dass der Mittelstrahl M eines Strahlenbündels S zwischen zwei optischen Elementen E, von denen zumindest eines zur Drehung in einem Drehteil 13 angeordnet ist, die Drehachse x des Drehteils 13 schneidet oder mit ihr zusammen fällt, wobei weiter das in Strahlrichtung der Sendeeinheit 11 liegende letzte bzw. das in Strahlrichtung der Empfängereinheit 12 liegende erste strahlumlenkende Element 14 in dem Drehteil 13 angeordnet ist, welches strahlumlenkende Element 14 ein Spiegel oder dergleichen sein kann.

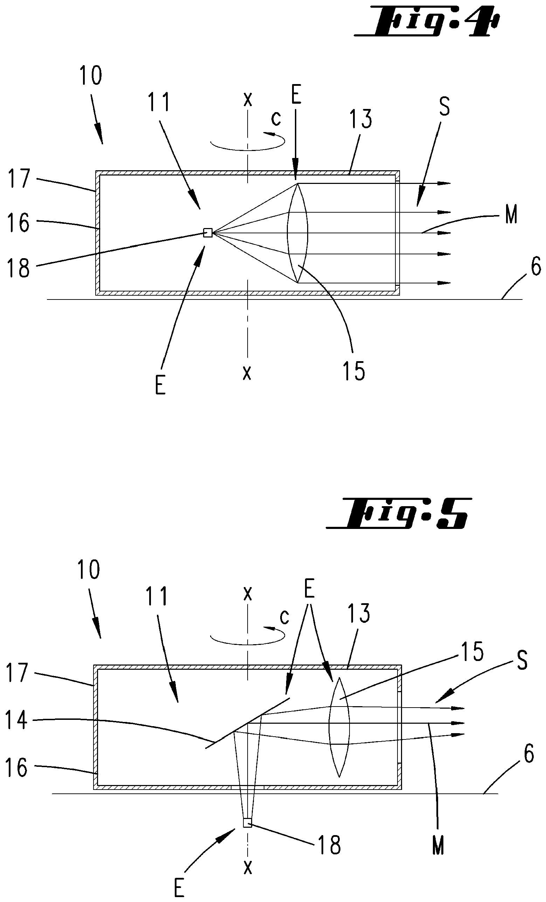

Die Figuren 4 bis 7 zeigen Ausführungsbeispiele bzgl. einer drehbaren Ausgestaltung der Sendeeinheit 11. Diese kann mit einer zugleich drehenden Empfängereinheit 12 zusammenwirken, alternativ auch mit mehreren fest in dem gegenüber dem Drehteil 13 feststehenden Gerät 1 über den Umfang gleichmäßig verteilt angeordneten Empfängereinheiten 12.

Fig. 4 zeigt schematisch ein Drehteil 13, welches um die Drehachse x leuchtturmartig auf dem Aufsammelgerät 1 angeordnet drehbar ist. Mit radialem Abstand zur Drehachse x ist in dem Drehteil 13 die Sendeeinheit 11 bspw. in Form einer LED vorgesehen. Mit Bezug auf die Drehachse x der Sendeeinheit gegenüberliegend ist in dem Drehteil 13 ein optisches Element E positioniert, welches optische Element E hier ein strahlformendes Element 15 in Form einer bikonvexen Linse ist. Der Mittelstrahl M des von der Sendeeinheit 11 ausgehenden Strahlenbündels S schneidet die Drehachse x und durchsetzt das strahlformende Element 15 mittig und durchsetzt eine Wandung 16 eines schutzhaubenseitigen Zylinderteils 17 mit Bezug zur Drehachse x nach radial außen, welche Wandung 16 zumindest im lichtdurchsetzten Bereich transparent ausgestaltet ist.

Der Antrieb des Drehteils 13 erfolgt über einen gesonderten Elektromotor, wie mit Bezug auf eine weitere Ausführungsform weiter unten näher beschrieben.

Zufolge dieser Anordnung ist die komplette Sendeeinheit 11 inkl. Sendeteil und optischem Element E in dem Drehteil 13 angeordnet. Die Stromversorgung der Lichtquelle ist bspw. erreicht durch zwischen Drehteil 13 und Gerätehaubendecke vorgesehene Schleifkontakte.

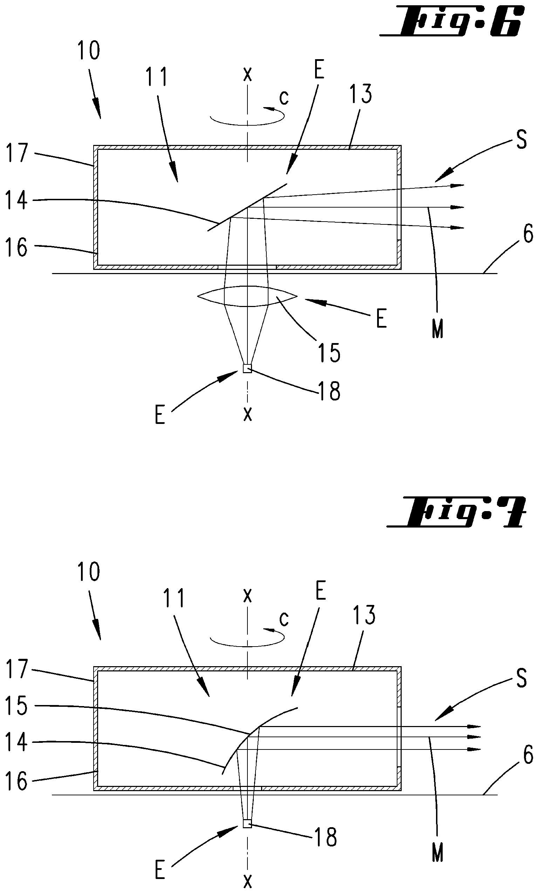

Eine weitere Ausführungsform ist in Fig. 5 dargestellt. Hier ist, wie auch in den weiteren Ausführungsformen gemäß den Figuren 6 und 7, die Lichtquelle 18 in dem gegenüber dem Drehteil 13 feststehenden Aufsammelgerät 1 angeordnet, derart, dass der von der Lichtquelle 18 ausgesandte Mittelstrahl M des Strahlenbündels S mit der Drehachse x zusammen fällt. Entsprechend ist, wenngleich nicht näher dargestellt, sowohl die Decke der Gerätehaube 6 als auch der zugewandte Boden des Drehteils 13 im strahldurchsetzten Bereich mit einer Öffnung versehen.

Gemäß der Darstellung in Fig. 5 ist das in Strahlrichtung der Lichtquelle 18 betrachtete letzte strahlumlenkende optische Element 14 in Form eines Spiegels und weitere darauffolgende optische Elemente E in dem Drehteil 13 und somit rotierend angeordnet, während optische Elemente E, die vor dem letzten strahlumlenkenden Element 14 angeordnet sind, ortsfest an bzw. in dem Gerät 1 verbleiben. Als letztes strahlumlenkendes Element 14 ist in Fig. 5 ein Planspiegel vorgesehen. Diesem ist in Strahlrichtung nachgeordnet ein strahlformendes Element 15 in Form einer Sammellinse (Bikonvexlinse).

In Fig. 6 ist dem strahlumlenkenden Element 14 (Planspiegel) als strahlformendes Element 15 eine Sammellinse vorgeordnet. Da diese vor dem letzten strahlumlenkenden Element 14 (hier der Spiegel) liegt, rotiert sie nicht, sondern verbleibt ortsfest in dem Gerät 1.

Fig. 7 zeigt eine Ausführungsform, bei welcher in dem Drehteil 13 ein gekrümmter Spiegel in Form eines Hohlspiegels vorgesehen ist. Dieser dient zufolge seiner Ausgestaltung sowohl als strahlumlenkendes Element 14 als auch als strahlformendes Element 15. Da dieses Element das in Strahlrichtung der Lichtquelle 18 betrachtete letzte strahlumlenkende Element 14 ist, ist dieses in dem Drehteil 13 angeordnet und um die Drehachse x rotierend.

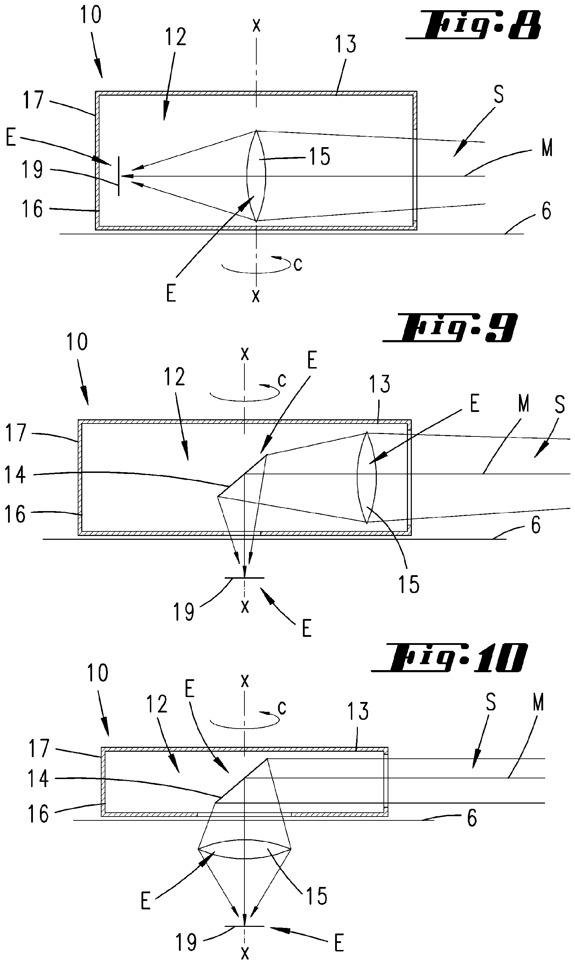

Mögliche Aufbaualternativen der Empfängereinheit 12 sind in den Darstellungen der Figuren 8 bis 11 gezeigt. Diese sind äquivalent zu den Sendeeinheit-Ausführungsformen gemäß den Figuren 4 bis 7. So zeigt Fig. 8 eine mögliche Ausgestaltung, bei welcher sowohl das Empfangselement 19 in Form einer Photodiode als auch ein strahlformendes Element 15 in Form einer optischen Linse in dem Drehteil 13 angeordnet sind, wobei das strahlformende Element 15 das einfallende Strahlenbündel S zum konzentrierten Auftreffen auf das Empfangs-element 19 bündelt. Das Drehteil 13 ist auch hier über einen gesonderten Elektromotor angetrieben, wobei eine elektrische Kontaktierung des Empfangselements 19 zwischen dem drehenden Drehteil 13 und dem feststehenden Gerät 1 mittels nicht dargestellter Schleifkontakte zwischen Drehteil 13 und Gerätehaube 6 erreicht ist.

In Fig. 9 ist eine Ausgestaltung gezeigt, bei welcher das in Strahlrichtung auf das Empfangselement 19 betrachtete erste strahlumlenkende optische Element 14 in Form eines Spiegels und ein vor diesem liegendes optisches Element E rotieren, während weitere optische Elemente E nach dem ersten strahlumlenkenden Element 14 ortsfest in dem Gerät 1 angeordnet sind. Als erstes strahlumlenkendes Element ist ein Planspiegel gewählt. Der Empfängereinheit 12 ist eine Sammellinse als strahlformendes Element 15 zugeordnet, die sich bei Anordnung in dem Drehteil 13 dreht, da diese Linse in Strahlrichtung betrachtet vor dem ersten strahlumlenkenden Element 14 angeordnet ist.

Fig. 10 zeigt eine Lösung, bei welcher wie in dem zuvor beschriebenen Ausführungsbeispiel das in Strahlrichtung der Empfängereinheit liegende erste strahlumlenkende Element 14 als Planspiegel ausgeführt und in dem Drehteil 13 angeordnet ist. Eine Sammellinse als strahlformendes Element 15 ist in Strahlrichtung hinter dem strahlumlenkenden Element 14 angeordnet und somit ortsfest in dem Gerät 1 positioniert, wie auch das Empfangselement 19.

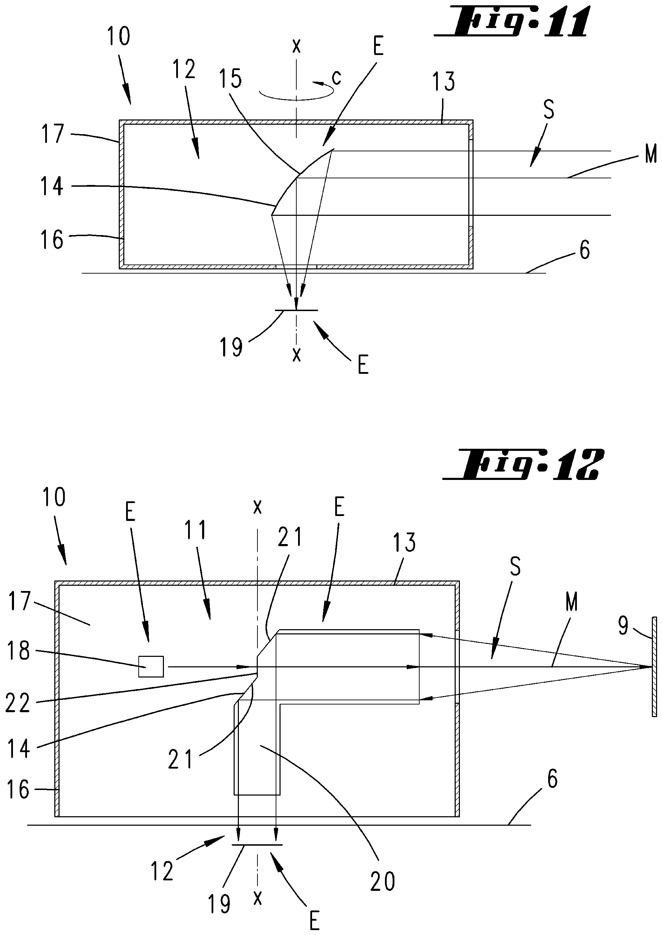

Auch kann gemäß der Darstellung in Fig. 11 der Empfangseinheit 12 ein gekrümmter Spiegel in dem Drehteil 13 angeordnet sein, welches zugleich der Strahlumlenkung als auch der Strahlformung dient. Da dieses Element das in Strahlrichtung betrachtete erste strahlumlenkende Element 14 ist, ist jedes weitere optische Element E diesem gegenüber ortsfest angeordnet, so in dem dargestellten Ausführungsbeispiel das Empfangselement 19.

Die Ausführungsformen gemäß den Figuren 5 bis 7 bzgl. der Sendeeinheit 11 als auch die Ausführungsformen der Fig. 9 bis 11 bzgl. der Empfängereinheit 12 zeichnen sich dadurch aus, dass die Schnittstelle zwischen dem sich drehenden Drehteil 13 und dem diesen gegenüber feststehenden Gerät 1 lediglich vom Strahlenbündel S durchsetzt wird. Eine elektrische Kontaktierung zwischen Drehteil 13 und Gerät 1 ist nicht nötig.

Fig. 12 zeigt eine kombinierte Ausführungsform von Sendeeinheit 11 und Empfängereinheit 12. Hier ist in dem Drehteil 13 ein prismatischer Lichtleiter 20 als optisches Element E vorgesehen. Dieser weist zunächst zwei in einer 90°-Stellung zueinander ausgerichtete Leiterschenkel, wobei ein vertikal ausgerichteter Leiterschenkel zentral die Drehachse x aufnimmt.

Eine unter 45° zur Drehachse x angestellte Fläche 21 im Knickbereich des Lichtleiters 20 dient zur Strahlumlenkung des vom Hindernis 9 reflektierten Lichtstrahls nach vertikal unten in Richtung auf das in dem Gerät 1 und somit ortsfest relativ zum Drehteil 13 angeordneten Empfangselement 19.

Die schräg angestellte Fläche 21 ist unterbrochen von einer separaten Einkopplungsfläche 22, die parallel ausgerichtet ist zu einer Querschnittsfläche des in Strahlrichtung der Lichtquelle 18 betrachteten letzten Lichtleiterschenkels. Diese Einkopplungsfläche 22 dient zur verlustarmen Einkopplung des Senderstrahls, dessen Mittelstrahl M den Lichtleiterschenkel mittig durchsetzt.

Die vom Hindernis reflektierten Strahlen werden durch die zufolge der Einkopplungsfläche 22 getrennt ausgeführten, schräg angestellten Flächen in eine achsparallele Richtung nach unten abgelenkt.

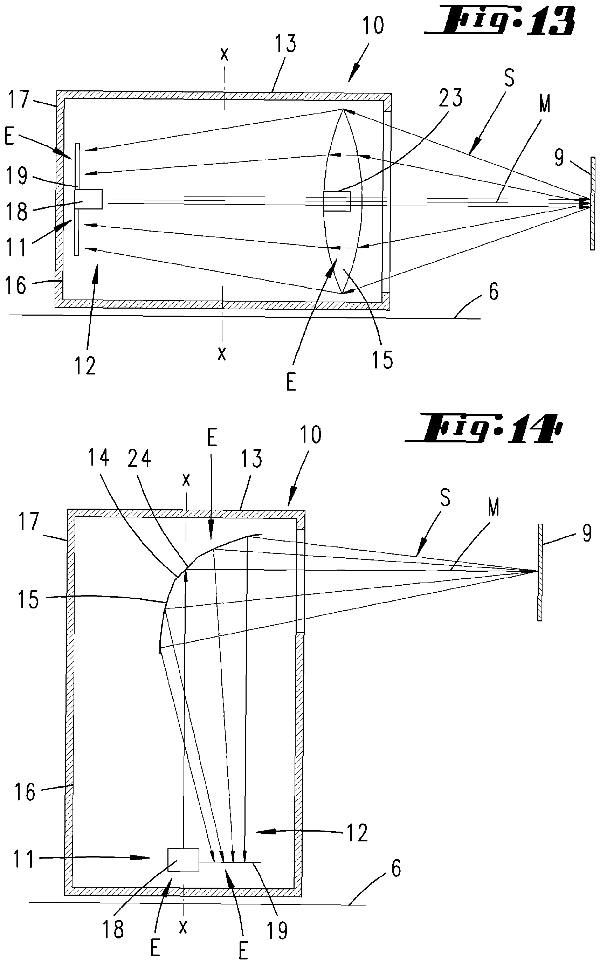

Eine weitere Ausführungsform einer kombinierten Sende- und Empfängereinheit zeigt Fig. 13. Die dem Empfangselement 19 zugeordnete Sammellinse (strahlformendes Element 15) liegt in dieser Ausführungsform zugleich im Strahlengang der Lichtquelle 18. Das Empfangselement 19 ist konzentrisch um die Lichtquelle 18 angeordnet, bspw. in Form einer ringförmigen Photodiode. Das von der Lichtquelle 18 ausgesandte Licht durchdringt das strahlformende Element 15 in einem bearbeiteten Bereich, in dem das strahlformende Element 15 als planparalleles dünnes Fenster ausgebildet ist. Hierzu ist zugewandt der Lichtquelle 18 die hier konvexe Linse mit einer zentralen, an dem Strahlengang ausgerichteten Bohrung 23 versehen, die eine Tiefe aufweist, die das planparallele Fenster auf der gegenüberliegenden Seite der Linse belässt. Da die der Lichtquelle 18 abgewandte, in Überdeckung zu der Bohrung 23 liegende Fläche eine geringfügige Krümmung aufweist, wirkt diese in Art einer planparallelen Fläche zu dem Bohrungsboden, so dass dieser Linsenbereich nicht strahlumformend wirkt. Vielmehr schützt das so verbleibende Fenster sowohl die Lichtquelle 18 als auch das Empfangselement 19 vor eindringendem Schmutz oder Beschädigung.

Der zur Messung ausgesandte Lichtstrahl durchdringt entsprechend das strahlformende Element 15 ohne weitere Umlenkung und wird nach Reflektion durch ein Hindernis 9 über das Element 15 in Richtung auf den konzentrisch zur Lichtquelle 18 angeordneten Empfangselement 19 zurückgeworfen.

Fig. 14 zeigt eine Ausführungsform, bei welcher dem Empfangselement 19 in dem Drehteil 13 ein asphärischer Hohlspiegel als strahlumlenkendes Element 14 zugeordnet ist. Dieser dient sowohl zur Strahlumlenkung als auch zur Strahlformung.

Der Lichtquelle 18 ist weiter ein Planspiegel 24 zur Strahlumlenkung zugeordnet, wobei dieser Planspiegel 24 in dem Hohlspiegel integriert ist, wozu der Bereich, der von dem Lichtleiter 20 angestrahlt wird, als Planspiegel im Sinne einer Facette in dem Hohlspiegel ausgeführt ist.

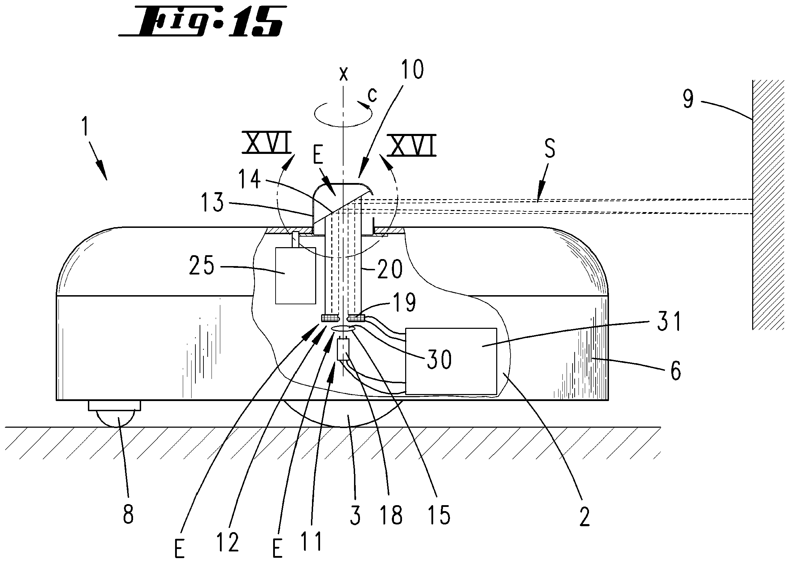

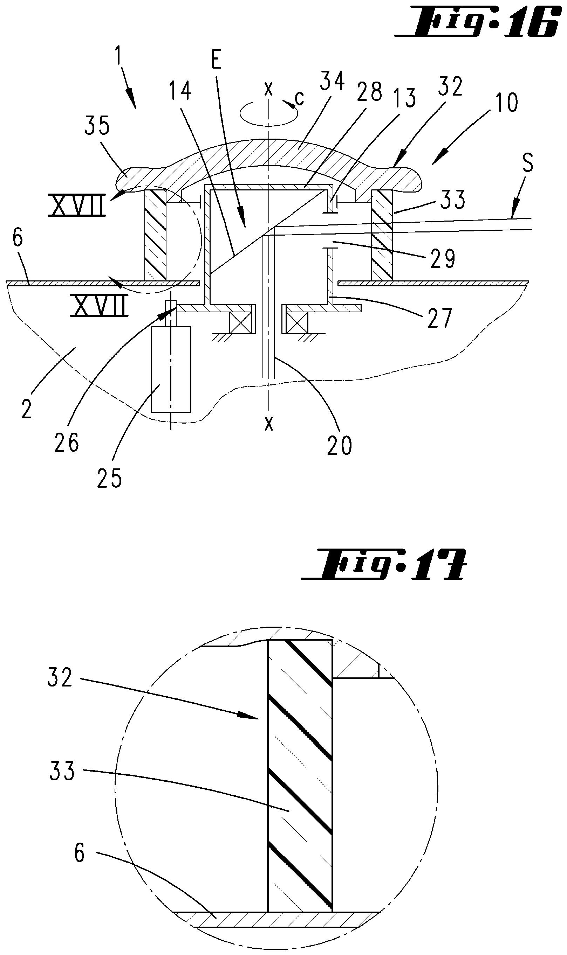

Die Figuren 15 und 16 zeigen eine mögliche Ausgestaltung zum Antrieb des Drehteils 13.

Der Antrieb erfolgt über einen in dem Gerät 1 angeordneten separaten Elektromotor 25, mit einer Reibradübertragung 26 zwischen Elektromotor 25 und dem Drehteil 13. Hierbei ist das Drehteil 13 als ein Zylinderteil 27 ausgestaltet, welches zunächst grundsätzlich lichtundurchlässig gestaltet ist und von einem Deckenabschnitt 28 überdeckt ist. In dem Drehteil 13 ist ein strahlumlenkendes Element 14 in Form eines mittig von der Drehachse x durchsetzten und sich in einer mit Bezug zu Drehachse x in einer um 45° angestellten Ebene erstreckenden Planspiegels angeordnet. Im nach radial außen gerichteten Strahlengang ist die Wandung des Zylinderteils 27 mit einem strahlendurchlässigen Fenster 29 versehen.

Das Drehteil 13 bzw. dessen Zylinderteil 27 durchsetzt eine deckenseitige Öffnung der Gerätehaube 6, unterhalb welcher Decke die Reibradübertragung 26 erfolgt.

Die Ausführung der Sendeeinheit 11 entspricht der Ausführung gemäß Fig. 6, die der Empfängereinheit 12 der der Ausführung aus Fig. 11, wobei das strahlumlenkende Element 14 hier als Planspiegel ausgeführt ist.

Als einziges Teil der Sende- und Empfängereinheiten dreht sich das Drehteil 13 mit dem überdeckten Zylinderteil 27, welches das strahlumlenkende Element 14 beinhaltet. Die weitere optischen Elemente E, wie ein vom strahlumlenkenden Element 14 nach vertikal unten in das Gerät 1 einragender Lichtleiter 20, das Empfangselement 19, die Lichtquelle 18 und weiter eine ein strahlformendes Element 15 bildenden Kollimatorlinse 30 sind ortsfest in dem Gerät 1 angeordnet.

Eine weiter in dem Roboter 1 vorgesehene Elektronik 31 steuert die Ausgangssignale der Lichtquelle 18 und dient weiter der Verarbeitung der über das Empfangselement 19 aufgefangenen Lichtsignale, zur angepassten Steuerung des Gerätes 1, insbesondere hinsichtlich des Verfahrverhaltens.

Das Drehteil 13 ist in dem dargestellten Ausführungsbeispiel weiter von einer Schutzhaube 32 überdeckt. Diese besteht zunächst aus einem Zylinderteil 33, welches von oben durch einen Deckel 34 verschlossen ist. In alternativer Ausgestaltung ist die Schutzkappe 32 einteilig ausgebildet, wobei diese auch von der dargestellten Zylindrizität abweichen kann, sofern dies keine nachteilige Beeinflussung des Strahlengangs nach sich zieht. Die Schutzkappe 32 ist drehfest auf der Gerätehaube 6 angeordnet.

Der transparent gehaltene Zylinderteil 33 schützt die innenliegende drehende Mechanik, so insbesondere das Drehteil 13 mit dem strahlumlenkenden Element 14. Das Zylinderteil 33 lässt den Lichtstrahl und das reflektierte Licht für die Abstandsmessung ungehindert passieren. Der Deckel 34 schließt das System nach oben hin ab. Dieser besteht aus undurchsichtigem Material.

In der dargestellten Ausführungsform ist der Deckel 34 mit einem radial vorstehenden Wulst 35 versehen. Dieser fängt bei Zusammenstößen des Gerätes mit Hindernissen im Bereich der Sensorik Stöße ab und schützt den transparenten Bereich des Zylinderteils 33 vor Beschädigungen, insbesondere Kratzern.

Alle Bereiche bis auf das ringförmige Austrittsfenster, welches durch das Zylinderteil 33 gebildet ist, können zumindest wandungsinnenseitig lackiert oder beschichtet sein, um so Streulicht abzublocken. Darüber hinaus kann der transparente Bereich des Zylinderteils mit einer speziellen Färbung oder Beschichtung versehen sein, die alle Wellenlängen bis auf die des Lichtstrahls zur Messung absorbiert.

Wie insbesondere aus der vergrößerten Detaildarstellung in Fig. 17 zu erkennen, ist das transparent gestaltete Zylinderteil 33 streng zylindrisch ausgestaltet, mit entsprechend koaxial zur Drehachse x ausgerichteten Außen- und Innenflächen. In alternativer Ausgestaltung können diese parallelen Flächen auch in einem spitzen Winkel zu einer Achsparallelen verlaufen, zur kegelstumpfartigen Ausgestaltung des Zylinderteils 33.

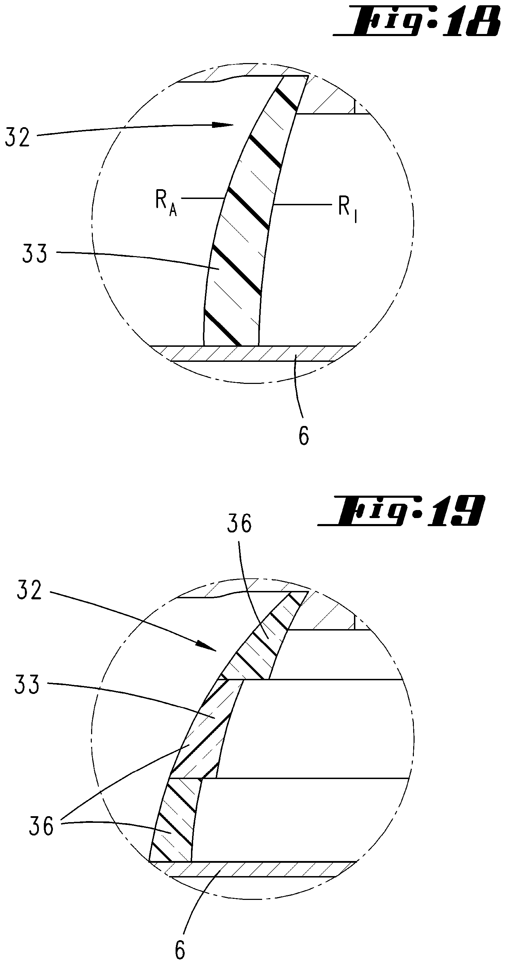

Eine weitere Ausführungsform gemäß Fig. 18 sieht vor, dass in einem Querschnitt betrachtet die Wandung des Zylinderteils 33 durch zwei Kreisbögen gestaltet ist, wobei bevorzugt der radial innere, die Innenfläche darstellende Kreisbogen R₁ größer gewählt ist als der die Außenfläche darstellende Kreisbogen R_{A}, womit dem transparenten Teil des Zylinderteils 33 zugleich eine strahlformende Eigenschaft zugeordnet ist.

Auch kann das Zylinderteil 33 gemäß der Darstellung in Fig. 19 in Art einer Fresnellinse ausgebildet sein. Hierbei besteht das Zylinderteil 33 im dargestellten Ausführungsbeispiel aus drei in Axialrichtung hintereinander geschalteten einzelnen Segmenten 36, die zueinander durch Kleben oder Schweißen gefügt sind. Hierbei ist die gebildete Außenfläche glatt gestaltet, um so einer Staubanhaftung in etwaigen Lücken entgegenzuwirken. Die Innenfläche hingegen ist segmentiert, gestuft zur Ausbildung einer fresnellinsenartigen Wandung.

Ist nur eine entsprechend den vorbeschriebenen Ausgestaltungen drehbare Empfängereinheit 12 vorgesehen, so können über den Umfang des Gerätes 1 verteilt mehrere Lichtquellen 18 als Sendeeinheiten 11 angeordnet sein, die angepasst an die Drehgeschwindigkeit der Empfängereinheit 12 getaktet impulsartige Lichtstrahlen aussenden, die von dem drehenden Empfangselement 19 aufgefangen werden.

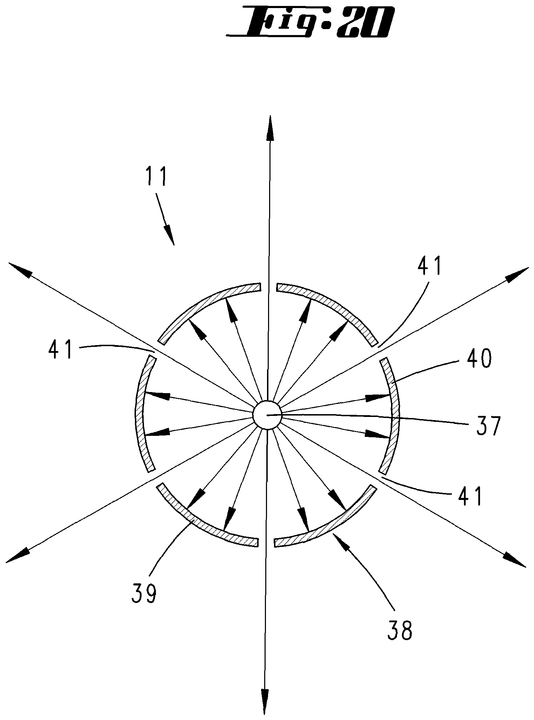

Alternativ zu einer Anordnung von mehreren einzelnen Lichtquellen 18 ist gemäß der schematischen Darstellung in Fig. 20 eine zentrale Strahlenquelle 37 vorgesehen. Diese ist von einer Haube 38 überdeckt, die mit ihrer umlaufenden Wandung 39 eine Blende 40 ausformt. Hierzu sind in der Wandung 39 gleichmäßig über den Umfang verteilt sechs Durchbrüche 41 als Strahlenausgänge vorgesehen.

Die Wandung 39 als auch die Decke der Haube 38 sind lichtundurchlässig gestaltet, so dass die eine Strahlenquelle 37 mehrere, die Durchbrüche 41 durchsetzende Messstrahlen erzeugt, wobei die Strahlenquelle 37 über einen Umfangswinkel von 360° ausstrahlt.

In vorteilhafter Ausgestaltung ist jeder Durchbruch 41 mit einem strahlformenden Element 15 in Form einer Sammellinse versehen, welche den jeweiligen austretenden Lichtstrahl stärker bündelt.

### Bezugszeichenliste

- 1: Bodenstaub-Aufsammelgerät
- 2: Chassis
- 3: Verfahrräder
- 4: Chassisboden
- 5: Bürste
- 6: Gerätehaube
- 7: Schmutzrampe
- 8: Mitlaufrad
- 9: Hindernis
- 10: Hinderniserkennung
- 11: Sendeeinheit
- 12: Empfängereinheit
- 13: Drehteil
- 14: strahlumlenkendes Element
- 15: strahlformendes Element
- 16: Wandung
- 17: Zylinderteil
- 18: Lichtquelle
- 19: Empfangselement
- 20: Lichtleiter
- 21: Fläche
- 22: Einkopplungsfläche
- 23: Bohrung
- 24: Planspiegel
- 25: Elektromotor
- 26: Reibradübertragung
- 27: Zylinderteil
- 28: Deckenabschnitt
- 29: Fenster
- 30: Kollimatorlinse
- 31: Elektronik
- 32: Schutzhaube
- 33: Zylinderteil
- 34: Deckel
- 35: Wulst
- 36: Segmente
- 37: Strahlenquelle
- 38: Haube
- 39: Wandung
- 40: Blende
- 41: Durchbrüche

- c: Drehrichtung
- r: Verfahrrichtung

- E: optische Elemente
- M: Mittelstrahl
- S: Strahlenbündel

- x: Drehachse

## Patentansprüche

1. Selbsttätig verfahrbares Gerät, insbesondere selbsttätig verfahrbares Bodenstaub-Aufsammelgerät (1), mit elektromotorisch angetriebenen Verfahrrädern (3), einem Gerätegehäuse und vorzugsweise einem Staubsammelbehälter, wobei das Gerät (1) mit einer Hinderniserkennung (10) versehen ist, die aus optischen Sende- und Empfängereinheiten (11, 12) besteht und wobei Elemente zur Strahlumlenkung vorgesehen sind, wobei weiter zur Rundumerfassung zumindest ein Teil der Sende- und Empfängereinheiten (11, 12) um 180° oder mehr drehbar angeordnet ist, **dadurch gekennzeichnet, dass** die Sende- und Empfängereinheiten (11, 12) auf einem der optischen Messverfahren Phasenkorrelation, Lichtlaufzeitmessung oder Heterodynverfahren beruhen, dass bezüglich der zumindest teilweise drehbaren Anordnung der Sende- und/oder Empfängereinheiten (11, 12) die Führung eines Strahls so erfolgt, dass der Mittelstrahl (M) eines Strahlenbündels (S) zwischen wenigstens zwei optischen Elementen (E), von denen zumindest eines zur Drehung in einem Drehteil (13) angeordnet ist, die Drehachse (x) des Drehteils (13) im Falle der Sendeeinheit schneidet und im Falle der Empfangseinheit mit ihr zusammenfällt.

2. Gerät nach Anspruch 1, **dadurch gekennzeichnet, dass** eine rotierende 360°-Erfassung vorgesehen ist.

3. Gerät nach einem der vorhergehenden Ansprüche, **dadurch gekennzeichnet, dass** ein in Strahlrichtung der Sendeeinheit (11) liegendes letztes strahlumlenkendes Element (14) in dem Drehteil (13) angeordnet ist.

4. Gerät nach einem der vorhergehenden Ansprüche, **dadurch gekennzeichnet, dass** ein vor dem letzten strahlumlenkenden Element (14) vorgesehenes weiteres optisches Element (E) ortsfest angeordnet ist.

5. Gerät nach einem der vorhergehenden Ansprüche, **dadurch gekennzeichnet, dass** die Sendeeinheit (11) ortsfest angeordnet ist und in dem Drehteil (13) eine Strahlumlenkung mittels eines Spiegels oder Reflektors erfolgt.

6. Gerät nach einem der vorhergehenden Ansprüche, **dadurch gekennzeichnet, dass** in Strahlrichtung nach dem strahlumlenkenden Element (14) ein strahlformendes Element (15) angeordnet ist.

7. Gerät nach einem der Ansprüche 1 bis 5, **dadurch gekennzeichnet, dass** das strahlformende Element (15) im Strahlengang vor dem strahlumlenkenden Element (14) angeordnet ist.

8. Gerät nach einem der vorhergehenden Ansprüche, **dadurch gekennzeichnet, dass** ein in Strahlrichtung der Empfängereinheit (12) liegendes erstes strahlumlenkendes Element (14) in dem Drehteil (13) angeordnet ist.

9. Gerät nach einem der Ansprüche 3 bis 8, **dadurch gekennzeichnet, dass** ein nach dem ersten strahlumlenkenden Element (14) vorgesehenes weiteres optisches Element (E) ortsfest angeordnet ist.

10. Gerät nach einem der Ansprüche 4 bis 9, **dadurch gekennzeichnet, dass** die Empfängereinheit (12) ortsfest angeordnet ist und in dem Drehteil (13) eine Strahlumlenkung mittels eines Spiegels erfolgt, wobei, bevorzugt, ein strahlformendes Element (15) vor oder nach dem strahlumlenkenden Element (14) angeordnet ist.

11. Gerät nach einem der Ansprüche 4 bis 10, **dadurch gekennzeichnet, dass** das strahlformende Element (15) eine bikonvexe Linse ist und/oder das strahlumlenkende Element (14) ein Planspiegel ist und/oder das strahlumlenkende Element (14) ein gekrümmter Spiegel ist und/oder das strahlumlenkende Element (14) ein Hohlspiegel ist.

12. Gerät nach einem der Ansprüche 3 bis 11, **dadurch gekennzeichnet, dass** das strahlumlenkende Element (14) ein Prisma ist.

13. Gerät nach einem der Ansprüche 3 bis 12, **dadurch gekennzeichnet, dass** das Drehteil (13) von einer Schutzhaube (32) überdeckt ist und/oder dass das Drehteil (13) von einem gesonderten Motor (25) angetrieben ist, wobei, bevorzugt, der Antrieb über eine Reibkupplung erfolgt.

14. Gerät nach Anspruch 13, **dadurch gekennzeichnet, dass** die Schutzhaube (32) aus einem Zylinderteil (33) besteht, das von oben durch einen Deckel (34) verschlossen ist, wobei, bevorzugt, der Deckel (34) undurchsichtig gebildet ist.

15. Gerät nach einem der vorhergehenden Ansprüche, **dadurch gekennzeichnet, dass** über den Umfang verteilt mehrere Strahlenquellen feststehend angeordnet sind oder mehrere feststehende Strahlenempfänger ausgebildet sind, wobei, bevorzugt, die mehreren Strahlenquellen durch eine zentrale Strahlenquelle (37) verwirklicht sind, die von einer, eine Vielzahl von Strahlenausgängen aufweisenden Blende (40) umgeben ist.

## Claims

1. Self-propelling device, in particular a self-propelling floor dust collection device (1), comprising travel wheels (3) driven by an electric motor, a device housing and preferably a dust collection container, the device (1) being provided with an obstacle detection means (10) which consists of optical transmitting and receiver units (11, 12), and elements being provided for beam deflection, at least some of the transmitting and receiver units (11, 12) being arranged so as to be able to rotate by 180° or more for omnidirectional detection, **characterised in that** the transmitting and receiver units (11, 12) are based on one of the optical measuring processes of phase correlation, light propagation time measurement or heterodyne processes, and **in that** a beam is guided with respect to the at least partially rotatable arrangement of the transmitting and/or receiver units (11, 12) such that the centre beam (M) of a bundle of beams (S) between at least two optical elements (E), of which at least one is arranged for rotation in a rotary part (13), intersects the rotational axis (x) of the rotary part (13) in the case of the transmitting unit and coincides with said axis in the case of the receiving unit.

2. Device according to claim 1, **characterised in that** rotating 360° detection is provided.

3. Device according to either of the preceding claims, **characterised in that** a last beam-deflecting element (14) in the beam direction of the transmitting unit (11) is arranged in the rotary part (13).

4. Device according to any of the preceding claims, **characterised in that** a further optical element (E) provided upstream of the last beam-deflecting element (14) is arranged so as to be stationary.

5. Device according to any of the preceding claims, **characterised in that** the transmitting unit (11) is arranged so as to be stationary and a beam is deflected in the rotary part (13) by means of a mirror or reflector.

6. Device according to any of the preceding claims, **characterised in that** a beam-forming element (15) is arranged downstream of the beam-deflecting element (14) in the beam direction.

7. Device according to any of claims 1 to 5, **characterised in that** the beam-forming element (15) is arranged in the beam path upstream of the beam-deflecting element (14).

8. Device according to any of the preceding claims, **characterised in that** a first beam-deflecting element (14) in the beam direction of the receiver unit (12) is arranged in the rotary part (13).

9. Device according to any of claims 3 to 8, **characterised in that** a further optical element (E) provided downstream of the first beam-deflecting element (14) is arranged so as to be stationary.

10. Device according to any of claims 4 to 9, **characterised in that** the receiver unit (12) is arranged so as to be stationary and a beam is deflected in the rotary part (13) by means of a mirror, a beam-forming element (15) preferably being arranged upstream or downstream of the beam-deflecting element (14).

11. Device according to any of claims 4 to 10, **characterised in that** the beam-forming element (15) is a biconvex lens and/or the beam-deflecting element (14) is a plane mirror and/or the beam-deflecting element (14) is a curved mirror and/or the beam-deflecting element (14) is a concave mirror.

12. Device according to any of claims 3 to 11, **characterised in that** the beam-deflecting element (14) is a prism.

13. Device according to any of claims 3 to 12, **characterised in that** the rotary part (13) is covered by a protective hood (32) and/or **in that** the rotary part (13) is driven by a separate motor (25), the drive preferably occurring via a friction coupling.

14. Device according to claim 13, **characterised in that** the protective hood (32) consists of a cylinder part (33) which is closed from above by a cover (34), the cover (34) preferably being opaque.

15. Device according to any of the preceding claims, **characterised in that**, distributed over the circumference, a plurality of beam sources are fixedly arranged or a plurality of fixed beam receivers are formed, the plurality of beam sources preferably being implemented by a central beam source (37) which is surrounded by an aperture (40) having a plurality of beam outputs.

## Revendications

1. Appareil à déplacement automatique, en particulier appareil de collecte de poussière de sol (1) à déplacement automatique, comprenant des roues de déplacement (3) entrainées par un/des moteur(s) électrique(s), un boîtier d'appareil et préférentiellement un récipient de collecte de poussière, dans lequel l'appareil (1) est muni d'un dispositif de détection d'obstacle (10) constitué d'unités optiques de réception et d'émission (11, 12) et dans lequel sont prévus des éléments pour dévier les rayons, dans lequel en outre au moins certaines des unités d'émission et de réception (11, 12) sont agencées de manière à pouvoir tournées de 180° ou davantage pour une détection tout-autour, **caractérisé en ce que** les unités d'émission et de réception (11, 12) sont basées sur l'un des procédés de mesure optique suivants : la corrélation de phase, la mesure du temps de propagation de la lumière ou un procédé hétérodyne, **en ce que** par rapport à l'agencement au moins partiellement tournant des unités d'émission et/ou de réception (11, 12), le guidage d'un faisceau est mis en œuvre de manière que le faisceau central (M) d'un faisceau de rayons (S) entre au moins deux éléments optiques (E), dont au moins l'un est agencé dans une partie rotative (13) pour tourner, coupe l'axe de rotation (x) de la partie rotative (13) dans le cas de l'unité d'émission et coïncide avec celui-ci dans le cas de l'unité de réception.

2. Appareil selon la revendication 1, **caractérisé en ce qu'**est prévue une détection rotative à 360°.

3. Appareil selon l'une des revendications précédentes, **caractérisé en ce qu'**un dernier élément de déviation de faisceau (14) situé dans la direction du faisceau de l'unité d'émission (11) est agencé dans la partie rotative (13) .

4. Appareil selon l'une des revendications précédentes, **caractérisé en ce qu'**un autre élément optique (E) prévu avant le dernier élément de déviation de faisceau (14) est agencé de manière fixe.

5. Appareil selon l'une des revendications précédentes, **caractérisé en ce que** l'unité d'émission (11) est agencée de manière fixe et qu'une déviation du faisceau est réalisée dans la partie rotative (13) au moyen d'un miroir ou d'un réflecteur.

6. Appareil selon l'une des revendications précédentes, **caractérisé en ce qu'**un élément de formation de faisceau (15) est agencé dans la direction du faisceau après l'élément de déviation de faisceau (14).

7. Appareil selon l'une des revendications 1 à 5, **caractérisé en ce que** l'élément de formation de faisceau (15) est agencé dans le trajet du faisceau devant l'élément de déviation de faisceau (14).

8. Appareil selon l'une des revendications précédentes, **caractérisé en ce qu'**un premier élément de déviation de faisceau (14) situé dans la direction du faisceau de l'unité de réception (12) est agencé dans la partie rotative (13).

9. Appareil selon l'une des revendications 3 à 8, **caractérisé en ce qu'**un autre élément optique (E) prévu après le premier élément de déviation de faisceau (14) est agencé de manière fixe.

10. Appareil selon l'une des revendications 4 à 9, **caractérisé en ce que** l'unité de réception (12) est disposée de manière fixe et une déviation du faisceau a lieu dans la partie rotative (13) au moyen d'un miroir, dans lequel préférentiellement un élément de formation de faisceau (15) est agencé avant ou après l'élément de déviation de faisceau (14).

11. Appareil selon l'une des revendications 4 à 10, **caractérisé en ce que** l'élément de formation de faisceau (15) est une lentille biconvexe et/ou l'élément de déviation de faisceau (14) est un miroir plan et/ou l'élément de déviation de faisceau (14) est un miroir courbe et/ou l'élément de déviation de faisceau (14) est un miroir concave.

12. Appareil selon l'une quelconque des revendications 3 à 11, **caractérisé en ce que** l'élément de déviation de faisceau (14) est un prisme.

13. Appareil selon l'une des revendications 3 à 12, **caractérisé en ce que** la partie rotative (13) est recouverte par un capot de protection (32) et/ou **en ce que** la partie rotative (13) est entraînée par un moteur séparé (25), l'entraînement s'effectuant de préférence par un embrayage à friction.

14. Appareil selon la revendication 13, **caractérisé en ce que** le capot de protection (32) est constitué d'une partie cylindrique (33) qui est fermée par le haut par un couvercle (34), le couvercle (34) étant de préférence opaque.

15. Appareil selon l'une des revendications précédentes, **caractérisé en ce que** plusieurs sources de rayonnement sont agencées de manière fixe en étant réparties sur la périphérie ou plusieurs récepteurs de rayons fixes sont formés, dans lequel, de préférence, les différentes sources de rayonnement sont réalisées par une source de rayonnement centrale (37) qui est entourée par un écran (40) ayant une pluralité de sorties de rayonnement.
